# EUROPÄISCHE PATENTSCHRIFT

(11) **EP 0 682 047 B1**
(45) Veröffentlichungstag und Bekanntmachung des Hinweises auf die Patenterteilung: **13.10.1999**
(21) Anmeldenummer: 95106243.9
(22) Anmeldetag: 26.04.1995
(51) Int. Cl.: C08G 2/00, B01J 19/00

(54) **Verfahren zur Unterdrückung von Kondensationsreaktionen bei der Endgruppenstabilisierung von Acetalcopolymeren**
Method of preventing condensation reactions during the end-group stabilization of copolyacetals
Procédé de réduction de réactions de condensation lors de la stabilisation de copolyacétals par introduction de groupes terminaux

(30) Priorität: 09.05.1994 DE 4416328; 08.12.1994 DE 4443673
(43) Veröffentlichungstag der Anmeldung: 15.11.1995
(73) Patentinhaber: Ticona GmbH, 65451 Kelsterbach (DE)
(72) Erfinder: Hoffmockel, Michael, Dr., D-65527 Niedernhausen (DE); Sextro, Günter, Dr., D-65207 Wiesbaden (DE)

(56) Entgegenhaltungen:
- FR-A- 2 023 411
- CHEMICAL ABSTRACTS, vol. 105, no. 22, 1.Dezember 1986 Columbus, Ohio, US; abstract no. 191822p, & JP-A-61 151 220 (UBE IND.) 9.Juli 1986

## Beschreibung

Die Erfindung betrifft ein Verfahren zur Unterdrückung von Kondensationsreaktionen bei der Endgruppenstabilisierung von Acetalcopolymeren in wäßriger oder wäßrig-alkoholischer Lösung.

Es ist bekannt, daß Acetalcopolymere von den Kettenenden her sowohl in der Lösung als auch in der Schmelze und in wäßriger Suspension unter dem Einfluß basischer Katalysatoren oder in Gegenwart eines Formaldehydfängers, in der Hitze depolymerisiert werden können.

Besonders vorteilhaft erweisen sich die Abbaumethoden in Lösung - im folgenden als Hydrolyse bezeichnet. Bei Temperaturen von 90 bis 200°C wird unter Zusatz basischer Verbindungen, z.B. Alkalihydroxid, Ammoniak, organischer Basen, in Gemischen aus Wasser und Alkoholen gearbeitet (GB 986 925).

Die Abbaumethode unter Einsatz von z.B. tertiären Aminen hat den Nachteil, daß freigesetzter Formaldehyd zur Ausbildung von Zucker (Formosereaktion) in der Hydrolyselösung führen kann, die sich negativ auf Produkteigenschaften wie Farbe und thermische Stabilität auswirken.

Zur Verminderung dieser Reaktion wird der Zusatz von Alkalifluoriden, Alkaliphosphaten und Alkalisilikaten zur Hydrolyse beschrieben (CA Res. Discl./1980/190,61-2).

Die Formosereaktion ist eine Reaktion des Formaldehyds, die durch C-C-Verknüpfung zu höheren Zuckern führt. Es wurde gefunden, daß die Formosereaktion durch Aktivierung von metallischen Gefäßmaterialien außerordentlich beschleunigt wird. Beobachtet wurde diese Aktivierung beispielsweise bei den im Anlagebau üblichen Edelstählen DIN 1.4541 und DIN 1.4571 (US-Äquivalente: AISI 321 und AISI 316Ti). Eine Aktivierung kann eintreten, wenn die Hydrolyse zeitweise in ungepuffertem, stark alkalischen Milieu durchgeführt wird. Eine Pufferwirkung ist zum Beispiel gegeben durch das Zusammenwirken eines Amins und der Ameisensäure, welche durch Disproportionierung von Formaldehyd (Cannizzaro-Reaktion) entsteht. Die Aktivierung bleibt bestehen, auch wenn die Hydrolyse in der Folge in geringer alkalischem oder neutralen Milieu durchgeführt wird. Die Formosereaktion läuft dann weiterhin außerordentlich schnell, offensichtlich autokatalytisch beschleunigt ab.

Der Erfindung liegt die Aufgabe zugrunde, die an aktivierten metallischen Oberflächen der Reaktionsgefäße ablaufende katalytisch beschleunigte Formosereaktion bei der Hydrolyse von Acetalpolymeren zu unterdrücken.

Erfindungsgemäß wird die Aufgabe dadurch gelöst, daß die metallischen Oberflächen der Reaktionsgefäße durch Behandlung mit 0,05 bis 50 ppm eines Alkaliphosphates, bezogen auf die Menge der eingesetzten Lösung bei einer Temperatur von 130 bis 200°C, vorzugsweise 150 bis 180°C, desaktiviert werden. Die Zeitdauer der Behandlung beträgt mindestens 5 Minuten, vorzugsweise 10 bis 120 Minuten. Als Alkaliphosphate werden primäre, sekundäre oder tertiäre Alkaliphosphate eingesetzt. Die Desaktivierung kann auch durch Behandlung mit einer wäßrigen oder wäßrig-alkoholischen Lösung von Phosphorsäure bzw. in Gegenwart von 10 bis 4000 ppm, vorzugsweise 50 bis 1000 ppm, einer organischen Base erfolgen. Die Desaktivierung kann einmalig erfolgen, nach Bedarf periodisch wiederholt oder kontinuierlich durchgeführt werden.

Als Alkoholkomponenten der wäßrig-alkoholischen Lösung eignen sich primäre aliphatische Alkohole, vorzugsweise Methanol.

Sie werden in Mengen von 20 bis 80 Gew.-% auf Wasser eingesetzt.

Als organische Basen sind tertiäre Amine geeignet. Als Alkaliphosphate eignen sich vorzugsweise Dialkalihydrogenphosphate in Lösung. Es ist jedoch auch möglich, von Phosphorsäure, Dihydrogenphosphaten oder Phosphaten auszugehen und vorzugsweise die stöchiometrische Menge Alkalihydroxid bzw. Phosphorsäure zuzusetzen.

Mit der erfindungsgemäßen Desaktivierung gelingt es überraschenderweise, die Aktivierung der Metalloberflächen der Reaktionsgefäße zu unterdrücken und damit die unerwünschten Kondensationsreaktionen der Zuckerbildung zu verhindern. Im Fall einer bereits erfolgten Aktivierung kann sie bereits durch einmalige Desaktivierung rückgängig gemacht werden.

Die Erfindung wird nachfolgend anhand von Beispielen näher erläutert.

Versuchsbeschreibung: Die Versuche wurden in einem Kleinautoklaven von 100 ml Volumen durchgeführt. Einem Lösemittelgemisch, bestehend aus 75 % Methanol, 9 % Trioxan, 11 % Wasser, 2 % Formaldehyd und 3 % Dioxolan, wurden die in den Beispielen genannten Komponenten zugesetzt und eine Stunde auf 170°C erhitzt. Danach wurde der Ansatz abgekühlt, filtriert und die Extinktion in einer Küvette von 1 cm Stärke bei 350 nm gemessen (Spektrophotometer Spectronic 301 der Fa. Milton Roy, Oostende, Belgien). Wenn der Extinktionsmeßwert größer als 1 war, wurde eine verdünnte Lösung gemessen und die Extinktion über den Verdünnungsfaktor berechnet. Die gemessenen Extinktionen sind in Tabelle 1 aufgeführt.

### Beispiel 1 (Vergleich)

Zu 35 g Lösemittelgemisch wurden 139 mg Triethylamin, 23 mg Ameisensäure und 4 g Rohpolymerisat, erhalten durch Massepolymerisation von Trioxan und Ethylenoxid in Gegenwart von BF₃ unter üblichen Bedingungen, zugesetzt und das Gemisch eine Stunde auf 170°C erhitzt. Diese Verfahrensweise wurde mit frischen Komponenten einmal wiederholt.

### Beispiel 2 (Vergleich)

Aus Beispiel 1 ist erkennbar, daß die Extinktionswerte bei der Wiederholung zunehmen. Um diese Versuche bei konstanten Bedingungen zu reproduzieren, wurde das in der Zusammensetzung schwankende Rohpolymerisat durch Paraformaldehyd als Modell für hydrolysierbare Endgruppen ersetzt.

Zu 35 g Lösemittelgemisch wurden 139 mg Triethylamin, 23 mg Ameisensäure und 500 mg Paraformaldehyd zugegeben und der Ansatz für eine Stunde auf 170°C erhitzt. Diese Verfahrensweise wurde mit frischen Komponenten viermal wiederholt.

### Beispiele 3 bis 5

Es wurde ebenso verfahren, wie unter Beispiel 2 beschrieben. Zusätzlich wurden 0,1 ppm, 1 ppm und 10 ppm Dinatriumhydrogenphosphat zugesetzt. An den verminderten bzw. nicht steigenden Extinktionsmeßwerten zeigt sich, daß die Aktivierung der Metalloberfläche zurückgedrängt wird (Beispiele 3 und 4) oder sogar ganz ausbleibt (Beispiel 5).

**Tabelle 1**

| Aktivierungszyklus | Beispiel 1V | Beispiel 2V | Beispiel 3 0,1 ppm | Beispiel 4 1 ppm | Beispiel 5 10 ppm |
|---|---|---|---|---|---|
| 1 | 8,83 | 0,08 | 0,09 | 0,03 | 0,05 |
| 2 | 19,17 | 6,96 | 0,17 | 0,04 | 0,05 |
| 3 | - | 15,02 | 0,56 | 1,74 | 0,03 |
| 4 | - | 14,95 | 3,99 | 0,1 | 0,04 |
| 5 | - | 18,26 | 7,92 | 0,1 | 0,05 |

## Patentansprüche

1. Verfahren zur Unterdrückung von Kondensationsreaktionen bei der Endgruppenstabilisierung von Acetalcopolymeren in wäßriger oder wäßrig-alkoholischer Lösung, dadurch gekennzeichnet, daß die metallischen Oberflächen der Reaktionsgefäße durch Behandlung mit 0,05 bis 50 ppm eines Alkaliphosphates, bezogen auf die Menge der eingesetzten Lösung, bei einer Temperatur von 130 bis 200°C desaktiviert werden.

2. Verfahren gemäß Anspruch 1, dadurch gekennzeichnet, daß anstelle eines Alkaliphosphates Phosphorsäure zur Desaktivierung verwendet wird.

3. Verfahren gemäß Anspruch 1, dadurch gekennzeichnet, daß als Alkaliphosphate primäre, sekundäre oder tertiäre Alkaliphosphate eingesetzt werden.

4. Verfahren gemäß Anspruch 1 bis 3, dadurch gekennzeichnet, daß die Desaktivierung in Gegenwart von 10 bis 4000 ppm, vorzugsweise 50 bis 1000 ppm, jeweils bezogen auf die Menge der eingesetzten Lösung, einer organischen Base vorgenommen wird.

5. Verfahren gemäß den Ansprüchen 1 bis 4, dadurch gekennzeichnet, daß die Desaktivierung einmalig erfolgt oder nach Bedarf periodisch wiederholt wird, wobei die Zeitdauer der Behandlung mindestens 5 Minuten, vorzugsweise 10 bis 120 Minuten beträgt.

6. Verfahren gemäß Anspruch 4, dadurch gekennzeichnet, daß die Desaktivierung kontinuierlich durchgeführt wird.

## Claims

1. A method of suppressing condensation reactions in the end group stabilization of acetal copolymers in aqueous or aqueous-alcoholic solution, which comprises deactivating the metallic surfaces of the reaction vessels by treatment with from 0.05 to 50 ppm of an alkali metal phosphate, based on the amount of solution used, at a temperature of from 130 to 200°C.

2. The method as claimed in claim 1, wherein phosphoric acid is used in place of an alkali metal phosphate for the deactivation.

3. The method as claimed in claim 1, wherein the alkali metal phosphate used is a primary, secondary or tertiary alkali metal phosphate.

4. The method as claimed in any of claims 1 to 3, wherein the deactivation is carried out in the presence of from 10 to 4000 ppm, preferably from 50 to 1000 ppm, in each case based on the amount of solution used, of an organic base.

5. The method as claimed in any of claims 1 to 4, wherein the deactivation is carried out once or is repeated periodically as required, with the duration of the treatment being at least 5 minutes, preferably from 10 to 120 minutes.

6. The method as claimed in claim 4, wherein the deactivation is carried out continuously.

## Revendications

1. Procédé pour l'empêchement de réactions de condensation lors de la stabilisation de groupements terminaux de copolymères d'acétal en solution aqueuse ou eau/alcool, caractérisé en ce que les surfaces métalliques des récipients de réaction sont désactivées à une température de 130 à 200°C par un traitement avec 0,05 à 50 ppm d'un phosphate alcalin, sur base de la quantité de la solution utilisée.

2. Procédé suivant la revendication 1, caractérisé en ce qu'à la place d'un phosphate alcalin, on utilise un acide phosphorique pour la désactivation.

3. Procédé suivant la revendication 1, caractérisé en ce qu'on utilise comme phosphates alcalins des phosphates alcalins primaires, secondaires ou tertiaires.

4. Procédé suivant les revendications 1 à 3, caractérisé en ce qu'on procède à la désactivation en présence de 10 à 4000 ppm, de préférence 50 à 1000 ppm, d'une base organique chaque fois sur base de la quantité de la solution utilisée.

5. Procédé suivant les revendications 1 à 4, caractérisé en ce que la désactivation se produit une seule fois ou est périodiquement répétée, selon les besoins, la durée du traitement étant d'au moins 5 minutes, de préférence de 10 à 120 minutes.

6. Procédé suivant la revendication 4, caractérisé en ce que la désactivation est réalisée en continu.
